# EUROPEAN PATENT APPLICATION

(11) **EP 1 764 321 A1**
(43) Date of publication of application: **21.03.2007**
(21) Application number: 05743275.9
(22) Date of filing: 25.05.2005
(51) Int. Cl.: B65G 61/00

(54) **PRODUCT MANAGEMENT SYSTEM**

(30) Priority: 31.05.2004 JP 2004160680
(71) Applicant: Densei-Lambda K.K., Tokyo 141-0022 (JP)
(72) Inventor: Sekimoto, Kazuhiko, c/o Densei-Lambda KK, Shinagawa-ku, Tokyo 141022 (JP); Kumazawa, Hisashi, c/o Densei-Lambda KK, Shinagawa-ku, Tokyo 141022 (JP); Watanabe, Sakae, c/o Densei-Lambda KK, Shinagawa-ku Tokyo 141022 (JP)
(74) Representative: Kayser, Martin
(86) International application number: PCT/JP2005/009525
(87) International publication number: WO 2005/115890

(57) **Abstract**

Pre-shipment data includes, in addition to product data representing features of the products P, data that associate product identification data for identifying each of the products P included in the product data with package identification data for identifying a carton C containing the products P. A management warehouse system 3a assumes that products corresponding to the product identification data associated with the package identification data have arrived if the package identification data included in barcode 52 scanned by a reader device exist in the pre-shipment data transmitted from the management warehouse system 3a.

## Description

### TECHNICAL FIELD

The present invention relates to a product management system in which a production management computer installed in a production plant located at a remote place such as an overseas country is connected via a communication line with a management warehouse computer installed in a management warehouse for managing a process from receiving and storing products sent from the production plant to their shipping.

### BACKGROUND ART

As a conventional system, for example, Japanese unexamined patent publication No. 2003-312847, discloses a physical distribution management system for unifying the management of a process from the warehousing and storing of delivery products that are logistical objects sent from a production plant at a remote place, such as an overseas country to the shipping of the delivery products. According to this system, management of logistical data yielded at respective stages or places, including not only logistical data on the production and shipment in the production plant at a remote place such as an overseas country, but also the data on the warehousing and storing of the products produced in such overseas production plant in a domestic management warehouse and on the subsequent shipment of those products to customers, is unified so that an operator can grasp a status of products from production to stock in real time.

Generally, in a system of this kind, identification data or the like that are pertinent to the products are imported as electronic data to be managed by a computer. Specifically, in a production plant that is to deliver products produced therein, media such as barcodes or IC tags that support product identification data for identifying each product are attached to the products, and then in a management warehouse, these product data are scanned with a barcode reader or the like. Thus, work histories of the products in the warehouse are stored in a computer, which are updated every time a new work is done relative to each product.

### PROBLEMS TO BE SOLVED BY THE INVENTION

According to the conventional system mentioned above, a barcode label containing product identification data of respective products is generally attached thereto in a production plant and then one or more of the products are brought together to be packed into a package such as a carton. Thereafter, a plurality of such packages are collected up to be treated as a cargo unit, which is then sent to a domestic management warehouse via a transportation company.

Then, in the domestic management warehouse that receives the cargo, each of the received cargos is subject to goods inspection at the time of arrival such that a package of each cargo sent from the production plant is unpacked, and then an outer package of each package within the cargo is unpacked so that a barcode label attached to each product within the package is scanned by using a scanning function such as that of a barcode reader. Thus, the product identification data of each product that has been scanned are checked for consistency with the product identification data included in pre-shipment data preliminarily reported from a production plant computer. If both the product identification data are consistent with each other, it is assumed that the products that exactly correspond to the product identification data have certainly arrived. Thus, product data indicating the features of the products inclusive of the above-mentioned product identification data are saved, as data on actually received incoming products, in a management warehouse computer installed in a management warehouse.

According to this system, however, when the number of products to be handled becomes vast, many drawbacks have been noted. That is, as the number of the products delivered increases, a data volume including data on the received products or the like becomes too large, so that data management at the management warehouse computer becomes complicated. Further, at the time of the arrival goods inspection in the management warehouse, the arrival packages must be all unpacked to read every barcode attached to all the products within the packages by scanning one by one, which would lead to vastly time-consuming labor hours. Furthermore, when the production plant and the management warehouse perform data management in mutually different logistical units (e.g., in a case where management by package is performed in the production plant while management by product in the management warehouse), it is difficult to specify which package contained a product in question and which product is the one to be returned if a customer returns the product or inquires about a defect of the product, thus leading to difficulties in making a prompt response thereto.

Moreover, whilst each product is subsequently stored in a predetermined position of the warehouse, if position identification data for identifying where each product is stored are related to each product on a one-on-one basis, then the data to be managed as the data on actually received incoming products will become further vast.

Further, workers who inspected the products have heretofore been required to enter their names in job cards or the like, which data would subsequently be imported into the management warehouse computer as operator identification data. Works for input from the job cards to the management warehouse computer, however, would be so cumbersome, requiring a huge amount of time for management of workers as well, which has been even more so in combination with the need of works for inspection of each product.

Recently, in substitute for the barcode label mentioned above, the use of an RFID (Radio Frequency Identification) tag referred to as a wireless IC has been taken into consideration, said RFID tag enabling the readout and rewriting of data in a contact-free manner by using electromagnetic waves. In reality, however, only a sheet-like RFID tag with a communication range of about 10 cm can be attached to a small-sized product due to some restriction in shape if the size thereof becomes small to a certain extent. For example, where box-shaped packages of products are stacked, the electromagnetic waves cannot sufficiently reach the tags attached to the products located in the middle of the stack. Thus, the advantages of the RFID tag eventually cannot be fully exploited, so that there has been a dissatisfaction that a time required for checking arrival of all products could not be reduced substantially.

On the other hand, in a production plant, inspection tags called "traveling tag" would be traveling on a production line together with each product. Every time any one step in a working process is completed, a worker put at a site for the step enters a check mark or the like in a predetermined column of the traveling tag to store and manage a work history of each product by means of the traveling tag. The traveling tag, however, is a paper in which a work history is entered. Hence, it is troublesome to continue to keep the traveling tag for each product over a fixed period of time. Further, when a user's complaint is received after shipment of a product, it takes too much time to locate the traveling tag corresponding to the product. In other words, the use of the traveling tag has brought about significant disadvantages both in storing work history data and in dealing with the complaints.

For eliminating such disadvantages, a method may be conceivable such that each traveling tag after the completion of work is converted into image data by a scanning means such as a scanner to be managed by using a personal computer. In this method, however, the storage of the image data in a personal computer only replaces the storage of the paper, thus resulting in a failure to provide a fundamental solution to the reduction of labor hours that are needed to search out specific image data.

With the view to the abovementioned problems, it is a first object of the present invention to provide a product management system that can simplify data management in a management warehouse computer, enabling the check of arrival of all products without the need to scan respective media attached to products one by one.

A second object of the present invention is to provide a product management system that can minimize a burden on data management in a management warehouse computer even if position identification data for identifying where each product is stored are added.

A third object of the present invention is to provide a product management system capable of simply managing as to which worker worked without the need of entering in a job card or the like.

A fourth object of the present invention is to provide a product management system capable of rapidly and certainly checking arrival of all products even if there are a large number of the products whose shapes allow only sheet-like RFID tags to be stuck thereto.

A fifth object of the present invention is to provide a product management system capable of eliminating the need to use any inspection tags on a production line.

### MEANS FOR SOLVING THE PROBLEMS

To achieve the first object mentioned above, there is provided a product management system according to a first aspect of the present invention in which a production management computer installed in a production plant of products is connected via a communication line with a management warehouse computer installed in the management warehouse for managing a process from arrival and storage of the products from the production plant to their shipment,
wherein the production management computer comprises: a pre-shipment data creating means; and a pre-shipment data transmitting means, in which the pre-shipment data creating means creates product data including product identification data for identifying each product and representing features of each product, and further creates pre-shipment data that associate package identification data for identifying a package containing one or more of the products with the product identification data. The pre-shipment data transmitting means transmits the pre-shipment data to the management warehouse computer. The management warehouse computer is provided with a reader device for reading or scanning a medium that is provided on the package and bears the package identification data of the package. Further, the management warehouse computer comprises a incoming product inventory management means for assuming that the products corresponding to the product identification data associated with the package identification data have arrived and then for storing the package identification data in the storage means as data on actually received incoming products if the package identification data included in the medium scanned by the reader device exist in the pre-shipment data transmitted from the production management computer.

In this case, the pre-shipment data transmitted from the production management computer include, besides the product data representing the features of the products, data for associating the product identification data for identifying each product included in these product data with the package identification data for identifying the package containing the products. Consequently, without unpacking the packages one by one to scan all the media such as barcodes or the like that are provided on the products included in the packages, it can be confirmed that the products have certainly arrived that correspond to the product identification data associated with the package identification data, by investigating whether the package identification data included in the media exist in the pre-shipment data or not. Besides, if the package identification data included in the media scanned by the reader device exist in the pre-shipment data, then the incoming product inventory management means installed in the management warehouse computer assumes that the products corresponding to the product identification data associated with the package identification data have arrived, thus allowing the package identification data containing no product data to be stored in the storage means as the data on actually received incoming products. In other words, the data on actually received incoming products essentially comprise only the package identification data corresponding to each package whose arrival has been checked. Since the individual product data containing the product identification data associated with its package identification data exist separately in the pre-shipment data, the data management in the management warehouse computer can be simplified.

In a product management system according to a second aspect of the present invention, the aforesaid media may comprise any one of a barcode, a two-dimensional code and a contact-free identification element. With barcode and two-dimensional code, recording can be performed by printing, while with a contact-free identification element such as an electronic tag, recording can be performed by writing.

In a production management system according to a third aspect of the present invention, the incoming product inventory management means allows position identification data to be included in the data on actually received incoming products to be stored in the storage means, in addition to the package identification data, said position identification data being associated with said package identification data to identify positions of the packages as stored, corresponding to the package identification data.

Thus, the data on actually received incoming products stored in the storage means comprise the package identification data corresponding to the package whose arrival has been confirmed and the position identification data for identifying the storage position of the package associated with the package identification data. Namely, the position identification data are associated not with the product data in which the products existing in vast numbers are defined individually as a minimum unit but with the package identification data in which the package containing one or more of the products is defined as a minimum unit. Hence, a burden on the data management in the warehouse computer is kept to the minimum.

Further, in a product management system according to a fourth aspect of the present data, after reading the medium, said reader device outputs operator identification data for identifying read operators whose identification data are stored beforehand to said incoming product inventory management means together with the package identification data included in said first medium, while said incoming product inventory management means allows said operator identification data to be included in said data on actually received incoming products to be stored in said storage means in addition to said package identification data, with said operator identification data being associated with said package identification data..

Thus, only by reading out the medium attached to the package using the reader device, the operator identification data for identifying a worker (i.e., operator) together with the package identification data included in the medium are output to the incoming product inventory management means. The incoming product inventory management means that has received the operator identification data can constitute the data on actually received incoming products stored in the storage medium by at least the package identification data corresponding to the package whose arrival has been confirmed and the operator identification data associated with the package identification data. Hence, the trouble of entering which worker did that work in a job card or the like can be saved. Besides, the operator identification data are associated not with the product data defining each of the products existing in vast numbers as the minimum unit but with the package identification data defining each of the packages containing one or more of the products as the minimum unit. Hence, a burden on the data management in the warehouse computer is kept to the minimum.

Furthermore, in a product management system according to a fifth aspect of the present invention, a first medium comprises an active RFID tag capable of reading out and rewriting in a contact-free manner and the reader device comprises antennae installed in a conveying passage of the package.

Accordingly, in the management warehouse for managing products from a production plant, every time a package containing one or more of the products passes through the conveying passage, the package identification data are read out of the first medium provided on the package by the reader device, so that with the package identification data and the product identification data being associated with each other, it can be confirmed in a short period of time that all the products included in the package have arrived without reading out product identification data by product. Besides, in this case, since not a passive RFID tag with a narrower communication range but an active RFID tag with a wider communication range is utilized as a first medium, the package identification data can be reliably obtained a certain distance away therefrom in a contact-free manner, without bothering to bring the antennae of the reader device closer to the first medium, Hence, with the package mounted on a delivery vehicle such as a cargo track, only by allowing the delivery vehicle to pass through the conveying passage, the package identification data are read out of the first media each provided on one or more of the packages, thus allowing arrival of all the products to be confirmed rapidly and certainly.

Moreover, in a product management system according to a sixth aspect of the present invention, a second medium provided on the product comprises a passive RFID tag with a narrower communication range than that of the first medium. Then, the pre-shipment data creating means is constituted so that the package identification data read out of the first medium and the product identification data read out of the second medium are associated with each other to create the pre-shipment data.

Accordingly, in the production plant, the product identification data are entered in the second medium provided on each product, while the package identification data are entered in the first medium provided on the package. Therefore, by reading the package identification data out of the first medium and the product identification data out of the second medium, the pre-shipment data associate these package identification data with the product identification data, thus allowing the pre-shipment data required to check the arrival of the products to be easily made up. Besides, at the time of inspection of arrival of product, since the product identification data need not be each read out of the second medium provided on each product, the passive RFID tag with the narrower communication range and of a comparatively low price can be utilized as the second medium, thus allowing the system to be easily established.

Besides, in a product management system according to a seventh aspect of the present invention, every time the package identification data read out of the first medium are received subsequently to the product identification data read out of the second medium, the pre-shipment data creating means associates these product identification data with the package identification data to thereby create the pre-shipment data.

Accordingly, the product identification data are each read out of the second medium provided on each product and thereafter the products are placed and packed in the package. Then, by reading the package identification data out of the first medium provided on the package, the pre-shipment data can be automatically made up along a packing workflow.

Further, in a product management system according to an eighth aspect of the present invention, a plurality of sensor means are provided corresponding to each process stage in a production line, while a second media comprising the RFID tag with the narrower communication range than that of the first media are provided on the products passing through the production line. Further, there is provided an RFID tag writing means for instructing the writing of work completion data indicating the work completion at the process step in the second medium for each process step corresponding to the sensor means when the sensor means senses the presence of the second medium.

Accordingly, only by bringing products close to the sensor means provided at each process step of the production line, the sensor means senses the presence of the second medium, so that the work completion data indicating the work completion at each process step are entered in the second medium. Besides, the work history data in which the work completion data at each process step are accumulated are stored in the second medium provided on the product completed. Consequently, even when complaints are yielded at users' end, the work history of the products in the production line can be obtained on the spot by reading the work history data directly out of the second medium, without bothering to refer to the production plant.

Further, in a product management system according to a ninth aspect of the present invention, an RFID tag writing instruction means is constituted so that date and hour the sensor means sensed the presence of the second medium are included in the work completion data.

Thus, since the date and hour of the work completion at each process step are included in the work history data stored in the second medium, a tact time for each product can be calculated from the date and hour that are included in the work history data, by reading out the work history data, thus enhancing traceability.

### EFFECTS OF THE INVENTION

According to a product management system of the first aspect of the present invention, the data management in the management warehouse computer can be simplified. Besides, the arrival of all the products can be confirmed without scanning each medium provided on the products.

According to a product management system of the second aspect of the present invention, when the barcode and the two-dimensional code are utilized, the record can be performed by printing, while when a contact-free identification element is utilized, the record can be performed by writing.

According to a product management system of the third aspect of the present invention, the position identification data for identifying where each product is stored are associated with the package identification data in which the package is defined as the minimum unit. Thus, even if such position identification data are added, the burden on the data management in the warehouse computer is kept to the minimum.

According to a product management system of the fourth aspect of the present invention, it can be easily managed which worker did that work, without taking the trouble to write in the job card or the like. Further, the operator identification data are associated with the package identification data in which the package is defined as the minimum unit. Hence, the burden on the data management in a warehouse computer is kept to the minimum.

According to a product management system of the fifth aspect of the present invention, even if there are a large number of the products whose shapes are ones to which only a sheet-like RFID tag can be stuck, the arrival of all the products can be rapidly and certainly confirmed.

According to a product management system of the sixth aspect of the present invention, the pre-shipment data needed to check the arrival of the products can be easily made up, and besides the system can be readily constituted.

According to a product management system of the seventh aspect of the present invention, the pre-shipment data can be automatically constituted along the packing workflow.

According to a product management system of the eighth aspect of the present invention, the work history data in which work completion data at each process stage are accumulated can be stored in a second medium, so that the work history of the product at the production line can be obtained then and there.

According to a product management system of the ninth aspect of the present invention, the tact time can be calculated for each product, thus allowing traceability to be enhanced.

### BRIEF DESCRIPTION OF THE DRAWINGS

The invention will be more readily understood by reference to the following description, taken with the accompanying drawings, in which:
FIG. 1 is a schematic view illustrating an overall framework of a product management system according to a first embodiment of the present invention.
FIG. 2 is a schematic view illustrating a flow of each product to shipment in a production plant according to the first embodiment of the present invention.
FIG. 3 is a schematic view illustrating a flow inspection of products that have arrived at a management warehouse system according to the first embodiment of the present invention.
FIG. 4 is a schematic view illustrating a flow of delivery and shipment of products whose arrival has been confirmed in the management warehouse system according to the first embodiment of the present invention.
FIG. 5 is a schematic view illustrating a flow until the completion of products on a production line according to a second embodiment of the present invention.
FIG. 6 is a schematic view illustrating a flow showing products are being contained and packed according to the second embodiment of the present invention.
FIG. 7 is a schematic view illustrating an example of use in the management warehouse according to the second embodiment of the present invention.

### BEST MODE FOR CARRYING OUT THE INVENTION

Hereunder is a description of preferred embodiments to which the present invention is applied with reference to the accompanying drawings

### First Embodiment

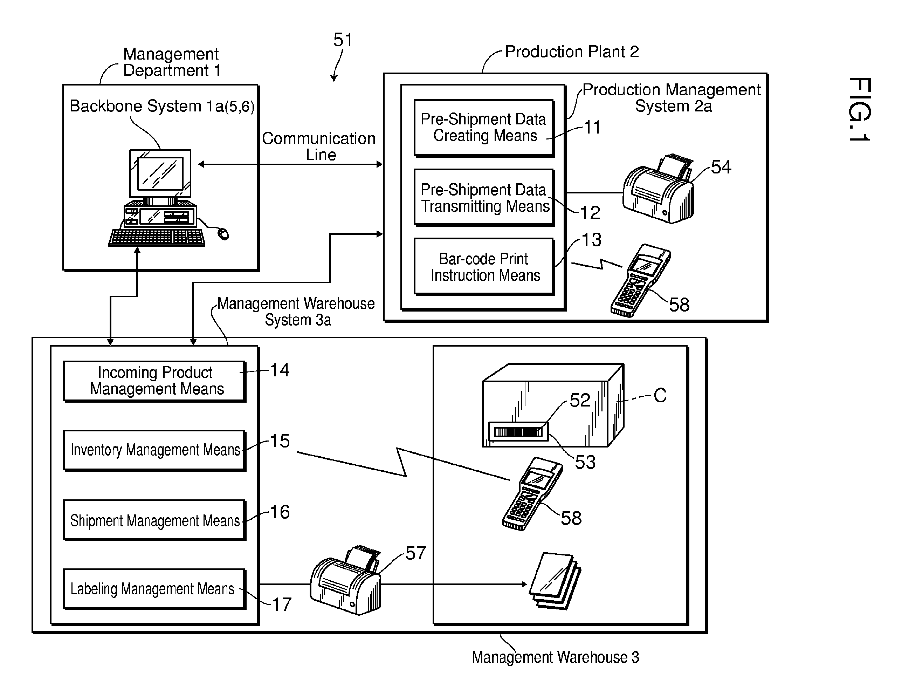

First, an outline framework of a product management system in accordance with a first embodiment of the present invention is described with reference to FIG. 1. The product management system according to the present embodiment comprises a production management system 2a installed in a production plant 2 in a remote place for producing products as logistical objects, a management warehouse system 3a installed in the management warehouse 3 that warehouses and stores the products produced in the production plant 2 and manages the products until their shipment, and a backbone system 1a that is installed in a management department 1 to perform order instructions to the production management system 2a and shipping instructions or the like to the management warehouse system 3a.

Any of the backbone system 1a serving as an administrative control device, the production management system 2a serving as a production management device, and the management warehouse system 3a serving as an arrival and delivery management device comprise a well-known personal computer (PC) or the like that comprises an operating means including input keys and a mouth, a display means such as an LCD, and a communication means such as a modem or the like. These systems can be connected to one another via an exclusive communication line or a general communication line (hereunder, referred to simply as a communication line 51) in which the Internet or the like is available. In this embodiment, on the assumption that a plurality of the management warehouse systems 3a are dispersed within the management warehouse 3, there is provided the backbone system 1a for unifying the management of various data stored in each of the management warehouse systems 3a. Where only one management warehouse system 3a exists, the function of the backbone management system 1a hereinbelow-described may be included in the management warehouse systems 3a.

The backbone system 1a comprises, as a functional means of programs held by itself, a transmission instruction means 5 for transmitting order placement data according to customers' orders and delivery instruction data for instructing delivery of specified products from among all the products stored in the management warehouse 3 to the customers or the like to the management warehouse system 3a via the communication line 51, and a management warehouse data storage means 6 for storing and managing a variety of data including arrival data, delivery data and sales amount data that are transmitted from each of the management warehouse systems 3a. Alternatively, the order placement data and the delivery instruction data or the like may be transmitted from a hardware system other than the backbone system 1a.

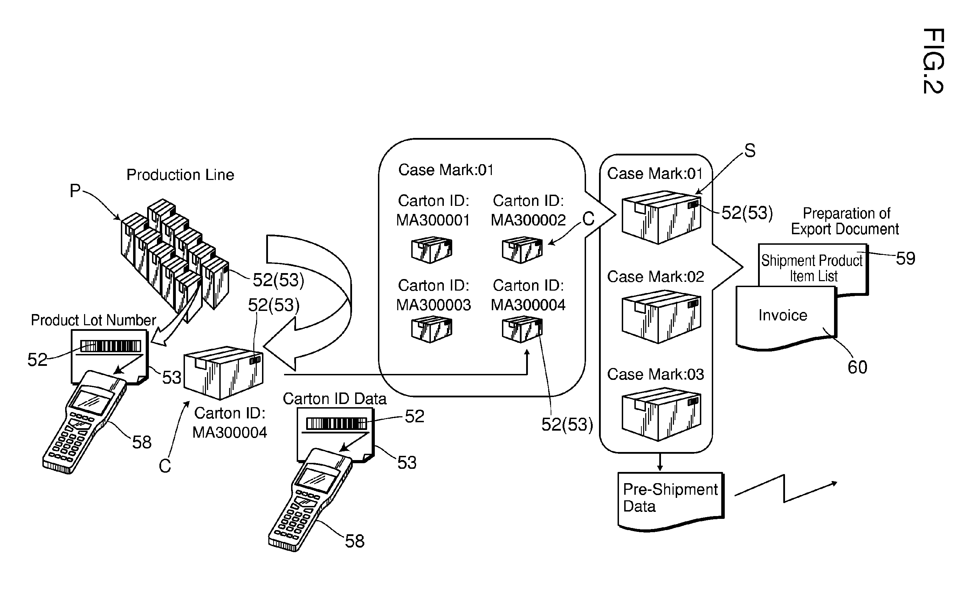

FIG. 2 represents a pre-shipment flow of each product P in the production plant 2. As shown in FIG. 1 and FIG. 2, the production management system 2a installed in the production plant 2 is provided with a barcode printer 54 capable of printing a specific barcode 52 on a surface of a label 53 and a reader device 58 such as a barcode reader equipped with a communication function to perform data communication with the production management system 2a by wireless. Alternatively, instead of the barcode printer 54, a different printer for printing two-dimensional codes (e.g., QR codes) or a writing machine for writing a variety of data on IC tags may be used. In a backside of the label 53, an adhesive surface is formed as is commonly known. Therefore, the label can be attached to an appropriate place of a carton (a returnable box) C serving as a package capable of containing an outer packing box of the products P and one or more of the products P and further can be attached to a proper place of a cargo case S serving as a cargo capable of containing one or more of the cartons C by cargo. Data of the barcode 52 printed on the surface of the label 53 or the two-dimensional code and the IC tag that substitute for the barcode are detailed afterward.

Further, the production management system 2a comprises a pre-shipment data creating means 11, a pre-shipment data transmitting means 12 and a barcode print instruction means 13. The pre-shipment data creating means 11 associates a carton ID data and a cargo identification data with each other by using, as a control program function of the production management system 2a, a scanning function and transmitting function of the reader device 58 every time a certain number of the products P are delivered in a production line and further associates document data pertinent to shipment documentation to store these data in a production data storage means formed in a partitioned part of or all of sections of a storage medium as a pre-shipment data. The carton ID data include product data indicating features of the product P such as a production plant number, a production line number, a product lot number, a production date or the like and identify the product lot number and the carton C containing one of or plurality of the products P every time a certain number of the products P are delivered in a production line. The cargo identification data identifies a case S for packing one or more of the cartons C by cargo at the time of delivering to the management warehouse 3. It is desirable that the shipment documentation including a shipment data item list 59 required for export and an invoice 60 that is a letter of transmittal using the carton ID data and the cargo identification data are made up. The pre-shipment data transmission means 12 transmits the pre-shipment data to the management warehouse system 3a of the management warehouse 3 that is a delivering destination via the communication line 51. The barcode print instruction means 13 gives printing instruction to an arbitrary barcode printer 54 subordinate to the production management system 2a to print on a surface of the label 53 the barcode 52 for supporting any of the production lot number data for specifying the products P, the carton ID data, and the cargo identification data.

Additionally, among the product data, a production lot number is one given specifically to each product P and corresponds to the product identification data for identifying the products P. Further, both the carton ID data that are package identification data and the cargo identification data corresponding to the case S are given specifically to each carton C and each case S.

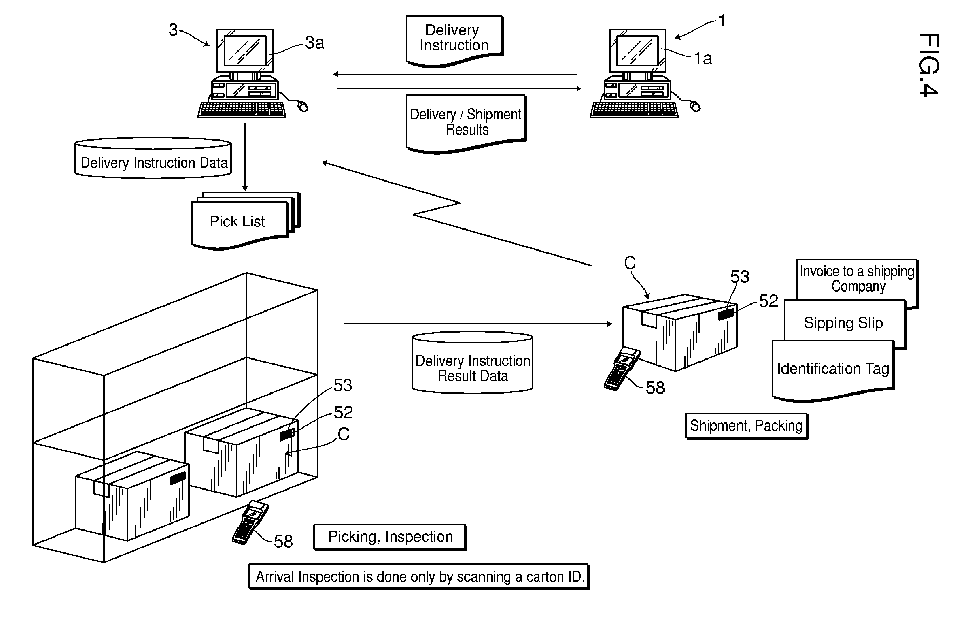

The management warehouse system 3a comprises a printer 57 serving as a delivery instruction output means for printing and outputting the delivery instruction data for a picking worker as a pick list (see FIG. 4) when receiving the delivery instruction from e.g., the backbone system 1a. In this regard, the delivery instruction output means may be one where the picking worker can learn contents of the delivery instruction and therefore e.g., may be a display unit installed in the warehouse. The printer 57 serves both as the delivery instruction output means and a delivery document printing means for printing documents required for the delivery such as an identification tag of the products P that is delivered and shipped, a delivery card, and the invoice for a shipping company. Furthermore, the management warehouse system 3a comprises the reader device 58 such as the barcode reader serving both as a scanning function for scanning the barcode 52 and the communication function for performing data communication with the management warehouse system 3a by wireless for the time of the arrival, picking and packing.

Inside the management warehouse system 3a, there are provided the some number of means with function to manage, by programs the management warehouse system 3a itself retains, all the products stored in the management warehouse 3. Specifically, the management warehouse system 3a is provided with an incoming product management means 14, a inventory management means 15, a shipment management means 16 and a labeling management means 17.

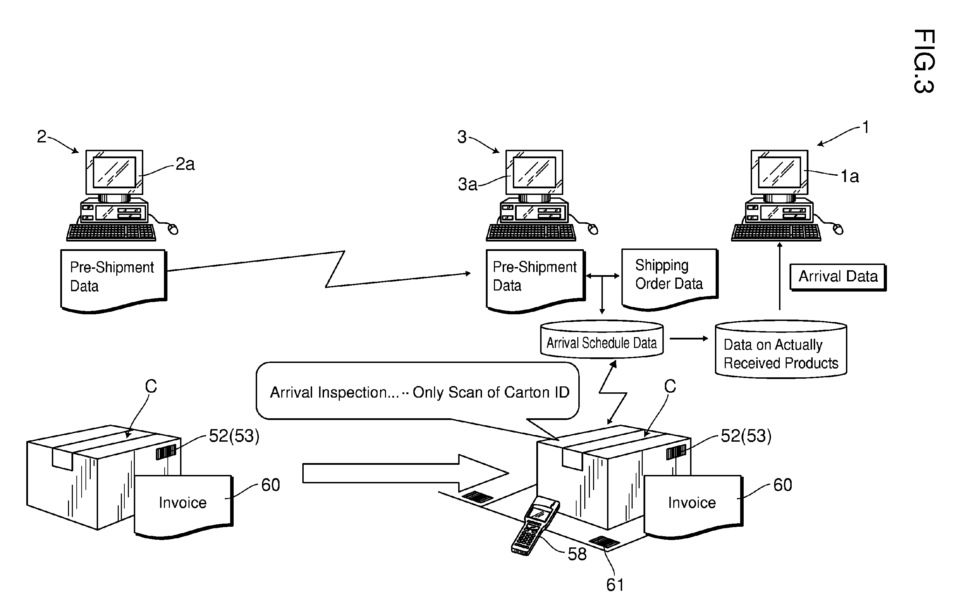

FIG. 3 illustrates a flow of inspecting the products P that have arrived at the management warehouse system 3a. The incoming product management means 14 used here makes preliminary arrival schedule data on the products P due to arrive from the production plant 2 based on order data sent out of the backbone system 1a and the pre-shipment data transmitted from the production management system 2a. Further, when the case S arrives, the incoming product management means 14 scans the carton ID data by the reader device 58 from the barcode 52 of the label 53 attached to each carton C to determine, as inspection of arrival of product, whether the carton ID data exists in the pre-shipment data included in the arrival schedule data or not. Furthermore, the inventory management means 15 comprises function to recognize the arrival of all the products P packed in the carton C from the product data containing the product lot number associated with the carton ID data if the carton ID data scanned by the reader device 58 exist in the pre-shipment data included in the arrival schedule data in the incoming product management means 14 as well as function to associate the carton ID data included in the data on actually received incoming products and a position where the carton C corresponding to the carton ID data is arranged with each other and store the data on actually received incoming products relating to the products P included in the carton C in an incorporated storage means. Moreover, this inventory management means 15 is optimally equipped also with function to transmit the data on actually received incoming products to the backbone system 1a as the arrival data via a communication line 51.

FIG. 4 illustrates a flow of the delivery and shipment of the products P whose arrivals have been confirmed in the management warehouse system 3a. The shipment management means 16 utilized here receives the delivery instruction sent from the backbone system 1a to extract the data on actually received incoming products associated with the product lot numbers of the products P relevant to the delivery instruction from among all the data on actually received incoming products, switching the data on actually received incoming products to the delivery instruction data to store the delivery instruction in the incorporated storage. Then, in order to notify, to the worker, part of or all of the delivery instruction data relevant to the products P, the shipment management means 16 outputs the part of or all of the delivery instruction data e.g., from the printer 57 as the pick list. When scanning the barcode 52 corresponding to the carton C containing the products P subjected to the delivery instruction by the reader device 58, the shipment management means 16 searches whether the delivery instruction data containing the carton ID data supported by the barcode 52 exist or not and if existing, switches the delivery instruction data to delivery instruction result data to store anew the delivery instruction result data in the storage means of the management warehouse system 3a.

When scanning, by the reader device 58, the barcode 52 corresponding to the carton C containing the products P immediately prior to the shipment, the labeling management means 17 searches whether the delivery instruction result data containing the carton ID data supported by the barcode 52 exist or not. If existing, the labeling management means 17 makes the printer 57 print out the documents required for shipment including the identification tag, the delivery card, the invoice for the shipping company or the like with regard to the product P. Further, when the delivery has been decided, the labeling management means 17 changes the delivery instruction result data into delivery result data to store anew the delivery result data in the storage means of the management warehouse system 3a. Besides, when the shipment has been decided, the labeling management means 17 changes the delivery instruction result data into the shipment result data to store anew the shipment result data in the storage means of the management warehouse system 3a. Furthermore, with regard to the products P that have been delivered and shipped, this labeling management means 17 comprises also function to transmit the delivery result data and shipment result data of the products P that are stored in the storage means to the backbone system 1a as the delivery data and the sales amount data.

Next is a description of flows of products and data from order of the products P to their warehousing and storage. When appellations, numerical quantities, desired delivery dates or the like of the products P ordered are determined according to orders from customers and then these order data are input to the backbone system 1a, the backbone system 1a stores the order data in the storage means incorporated in the backbone system 1a and then transmits the order data to the production management system 2a and the management warehouse system 3a using the transmission instruction means 5. In the production plant 2, a production planning is created based on the order data transmitted to the production management system 2a, so that the production of the products P ordered starts.

After the completion of the products P, the pre-shipment data creating means 11 constituting the production management system 2a creates data on the production plant number, the production line number, the product lot number, the production date or the like with regard to each of the products P as the product data to store the data. The barcode print instruction means 13 prints and outputs the barcodes 52 for supporting the production lot number assigned specifically to each of the products P on the labels 53 using the printer 54 to stick the label 53 with the barcode 52 to each of outsides of corresponding products P.

On the other hand, the barcode print instruction means 13 prints and outputs the barcode 52 corresponding to the specific carton ID data 52 and the barcode 52 corresponding to a specific cargo identification data on the label 53. Then, the label 53 with the barcode 52 containing the carton ID data is attached to each carton C in advance, while the label 53 with the barcode 52 containing the cargo identification data is attached to each case S in advance. Additionally, shapes of the each carton C and each case S are not particularly limited.

After that, when one or more of the products P are packed in the carton C, by scanning the surface of the label 53 attached to the outside of the carton C in advance and the surface of the label 53 attached to the outside of the product P to be packed in the carton C by using the reader device 58, the carton ID data and the production lot number that are included in the barcode 52 are data-transmitted to the production management system 2a. The pre-shipment data creating means 11 of the production management system 2a associates the carton ID data and the product lot number that are scanned by the reader device 58 with each other to store them. Subsequently, when packing one or more of the cartons C in the case S at the time of the shipment, by scanning the surface of the label 53 attached to the outside of the case S in advance and that of the label 53 attached to the outside of the products P packed in the case S using the reader device 58, the cargo identification data and the carton ID data that are included in the barcodes 52 are data-transmitted to the production management system 2a. The pre-shipment data creating means 11 associates the cargo identification data and the carton ID data that have been scanned by the reader device 58 with each other to store them in addition to the product lot number.

The foregoing system is specifically explained based on FIG. 2. When a plurality of the products P is packed in a specified carton C on the production line, the reader device 58 scans sequentially the barcode 52 provided on each product P and that 52 provided on the carton C for packing the products P. Here, e.g., if the carton ID data of the carton C are "MA300004", the notation by combination of English characters and numerical characters, the carton ID data "MA300004" and each production lot number of each product P is associated with each other by the pre-shipment data creating means 11. Further, in cases where four cartons C with the carton ID data "MA00001 to "MA300004" are packed in the case S that is one cargo unit at the time of the shipment, the reader device 58 scans sequentially the barcodes 52 provided on these cartons C and the barcode 52 provided on the case S for packing the cartons C. Assuming that the cargo identification data (a case mark) included in the barcode 52 provided on the case S is, e.g., numerical characters "01", the pre-shipment data creating means 11 associates the cargo identification data "01" and the carton ID data "MA300001" to "MA300004" with each other to store them. As a result, the cargo identification data, the carton ID data, and the product lot numbers are associated with one another and thus if the cargo identification data and the carton ID data, e.g., are set down as a search condition, the relevant product data are extracted from the product lot data associated with these data, thus allowing the product data and numerical quantity of each product P packed to be simply obtained without bothering to unpack one-by-one.

Here, considering cases where three cases S each possessed of the cargo identification data, e.g., "01" to "03" as shown in FIG. 2 are shipped and exported to the management warehouse 3, the pre-shipment data creating means 11 creates shipment documentations including a shipment item list 59 and an invoice 60 with regard to the three cases S that are shipment objects and then associates document data on the shipment documentations with the cargo identification data "01" to "03", storing these data as the pre-shipment data. In other words, the pre-shipment data contain the product data including the cargo identification data, the documentation data, the carton ID data, the product lot number data, the product lot number that are associated with one another, and the product lot number concerned.

Thus, when the association of the delivery products is completed in the production management system 2a, the shipment is performed by case S toward the management warehouse 3 after the shipment documentations including the shipment item list 59 and the invoice 60 are attached to the delivery products. Then, the production management system 2a transmits the pre-shipment data to the management warehouse system 3a before or after the shipment. The incoming product management means 14 constituting the management warehouse system 3a makes the order data sent out of the backbone system 1a and the pre-shipment data transmitted from the production management system 2a correspond to each other and Thus creates and stores the arrival schedule data on the products P due to arrive from the production plant 2.

In the management warehouse 3, when the case S that is a cargo from the production plant 2 has arrived, a worker unpacks the case S while checking the invoice 60 to take out the carton C that is a package included in the case S. At this moment, when the worker have scanned the carton ID data from the barcode 52 on the surface of the label 53 attached to the carton C using the reader device 58 that is portable, the incoming product management means 14 of the management warehouse system 3 determines, for the purpose of the inspection of arrival of product, whether the carton ID data scanned exist in the pre-shipment data included in the arrival schedule data or not. In addition, the reader device 58 may practice this judgment in the inspection of arrival of product and so may be equipped with part of the function of the incoming product management means 14. Then, if the carton ID data scanned by the reader device 58 exist in the pre-shipment data included in the arrival schedule data, the inventory management means 15 practices the inspection of arrival of product for checking that all the products P packed in the carton C has been warehoused from the product data containing the product lot number associated with the carton ID data. Further, in a position of the management warehouse 3 where the carton C is stored, at every area partitioned into a fixed size, the barcode 61 of position data for specifying the area is assigned at every area partitioned into a fixed size. The carton C subjected to the inspection of arrival of product by the inventory management means 15 is arranged within an arbitrary area. Then, when the barcode 61 of that area and the barcode 52 provided on the carton C are scanned by the reader device 58, respectively, the position identification data (that indicates the position the carton C is arranged) included in the barcode 61 and the carton ID data included in the data on actually received incoming products corresponding to the carton C are associated with each other and then the data thus associated are written over and stored (renewed) in the storage means incorporated in the management warehouse system 3a as the new data on actually received incoming products containing the position identification data.

Thus, the inspection of arrival of product at the management warehouse 3 is completed only by scanning the carton ID data from the barcode 52 on the surface of the label 53 attached to each carton C. Hence, there is no need to unpack the carton C to scan the barcode 52 provided on each product P. As a result, the time required for the inspection of arrival of product can be considerably cut down. Further, when the carton C is arranged within the arbitrary area in the management warehouse 3, by scanning the barcode 61 containing the position identification data corresponding to the area and the barcode 52 provided on the carton C by using the reader device 58, the carton ID data corresponding to the carton C and the data on actually received incoming products associated with the position data included in the barcode 61 are stored. Hence, based on the data on actually received incoming products, not only it can be rapidly searched where each carton C is stored in the management warehouse 3 but since the carton ID data and the product lot numbers are associated with each other, it can be grasped where each product P is stored in the management warehouse 3 without managing an enormous quantity of data as the data on actually received incoming products.

Thus, since the data on the inspection of arrival of product of the product P is stored by package (carton C), the quantity of data to be managed in the management system can be kept to the minimum as compared with managing data by product P. Additionally, after the data on actually received incoming products has been stored, the inventory management means 15 performs transmission telling that the products P included in the arrival schedule data have infallibly arrived to the backbone system 1a as the arrival data.

Next is, with reference to FIG. 4, a description for operation in a physical distribution process from the delivery of the products P stored in the management warehouse 3a to their shipment for handing over the products P to the shipping company or the like.

The backbone system 1a transmits delivery instructions of the product P whose arrival data exist to the shipment management means 16 of the management warehouse system 3a. The shipment management means 16 extracts the data on actually received incoming products specifically associated with the product P that received the delivery instructions, from among the data on actually received incoming products stored by the inventory management means 15, and then stores, in the incorporated storage means, the shipment schedule data including an expected date of the shipment or the like along with the shipment instruction data created for instructions to picking workers based on the shipment schedule data, respectively. The shipment management means 16 allows the printer 57 to print out a pick (sorting work) list where the packing identification data (the carton ID number) and the position identification data or the like that are a picking target are written. By the pick list, the picking workers can grasp in which carton C located at which place the products P they should deliver and ship are contained. Alternatively, in the pick list referred to here, the barcode corresponding to the package identification data and the position identification data may be set down. Then, by scanning the barcode using the reader device 58, the package identification data and the position identification data are stored temporarily in the reader device 58 and can be displayed in a display unit (not shown) of the reader device 58.

According to the pick list, the picking worker goes to the storage position of the carton C containing the product P to be delivered and shipped and then scans the barcode 52 provided on the carton C by the reader device 58. When the carton ID data included in the barcode 52 are transmitted to the management warehouse 3a, the shipment management means 16 searches whether the delivery instruction data containing the carton ID data exist or not. Alternatively, the scanning processing means 58 that has received the delivery instruction data may perform the search, while the scanning processing means 58 comprises part of the function of the shipment management means 16. Then, if the delivery instruction data corresponding to the carton ID data exist, the delivery instruction data are changed into the delivery instruction result data, which are anew stored in the storage means of the management warehouse system 3a. At the same time, the inventory management means 15 eliminates and updates the data on actually received incoming products containing the carton ID data. The data on actually received incoming products updated are transmitted to the backbone system 1a via the communication line 51 as the arrival data.

Where all the products P included in the carton C are included in the shipment instruction data, the carton C containing all the products is subjected to delivery operation with all the products P included in the carton C. On the contrary, if only part of the products P included in the carton C are included in the shipment instruction data, only the required number of the products P included in the carton C are taken out to be stored in a new carton C. Here, the barcodes 52 provided on the products P taken out are scanned by the reader device 58 and then the shipment instruction data corresponding to the carton ID data provided on the new carton C scanned similarly by the reader device 58 are switched to the delivery instruction result data. Besides, at the same time, the production lot numbers of the products P that have remained in the carton C and the original carton ID data are associated with each other to be renewed into the inventory management means 15. As a result, even if only the part of the products P included in the carton C have been taken out and shipped, correct shipment result data can be obtained as well as being able to grasp a state of the delivery and storage of each carton C.

Next, the worker packs the products P that they have picked. Then, after scanning, by using the reader device 58, the barcode 52 corresponding to the carton C containing the products P or the barcodes 52 provided on the products P, the worker searches whether the carton ID data supported by the barcode 52 or the delivery instruction result data containing the product lot numbers exist or not. Alternatively, the reader device 58 may perform the search, while the reader device 58 may be equipped with part of the function of the labeling management means 17. If the carton ID data or the delivery instruction result data containing the product lot numbers exist, the labeling management means 17 makes the printer 57 print out the documents required for the shipment including the identification tags, the delivery cards, the invoices to the shipping company or the like with regard to the products P to be shipped. Further, when the delivery has been decided, the labeling management means 17 switches this delivery instruction result data to the delivery result data to store anew the delivery result data in the storage means of the management warehouse system 3a and besides when the shipment has been decided, switches the delivery instruction result data to the shipment result data to store anew the shipment result data in the storage means of the management warehouse system 3a. These delivery result data and shipment result data are transmitted to the backbone system 1a as the delivery data and the sales amount data, which are subjected to uniform management by the management department 1 equipped with the backbone system 1a.

Part of or all of the shipment result data are sent to, e.g., a shipping company as a shipment account list. Further, the shipment result data are transmitted to the shipping company as shipment account data the shipping company stores.

As described above, in the present embodiment, there is provided the product management system in which connected via the communication line 51 are the production management system 2a that is installed in the production plant 2 of the products and serves as a computer for the production management computer, and the management warehouse system 3a installed in the management warehouse 3 for managing the process from the arrival and storage of the products P sent from the production plant 2 to their shipment to thereby serve as the management warehouse computer. The product management system 2a comprises the pre-shipment data creating means 11 and the pre-shipment data transmitting means 12. The pre-shipment data creating means 11 creates the product data including the product identification data (the product lot numbers) for identifying each product P and representing the features of the products P and further creates the pre-shipment data associating the package identification data (the carton ID data) for identifying the carton C serving as a package containing one or more of the products P with the product identification data. The pre-shipment data transmitting means 12 transmits the pre-shipment data to the management warehouse system 3a. The management warehouse system 3a is provided with the reader device 58 for reading a first medium (the barcode 52) that is provided on the carton C and bears the package identification data of the carton C. Further, the management warehouse system 3a comprises the incoming product inventory management means (the incoming product management means 14, the inventory management means 15) for assuming that the products corresponding to the product identification data associated with the package identification data have arrived to store the package identification data in the storage means as the data on actually received incoming products if the package identification data included in the medium scanned by the reader device 58 exist in the pre-shipment data transmitted from the production management system 3a.

In this case, the pre-shipment data transmitted from the production warehouse system 3a contain, in addition to the product data representing the features of the products P, data that associate the product identification data for identifying each product P included in the product data with the package identification data for identifying the carton C containing the products P. Accordingly, at the time of the inspection of arrival of product in the management warehouse 3, even if the carton C is not unpacked to read all the media such as the barcodes 52 or the like provided on the products P within the carton C, by scanning the medium provided on the carton C using the reader device 58, the arrival of the products P corresponding to the product identification data associated with the package identification data can be confirmed by checking whether the package identification data included in the medium exist in the pre-shipment data or not. Besides, if the package identification data included in the medium scanned by the reader device 58 exist in the pre-shipment data, the inventory management means 15 installed in the management warehouse 3a assumes that the products P corresponding to the product identification data associated with the package identification data have arrived to store the package identification data containing no product data in the storage medium as the data on actually received incoming products. In other words, the data on actually received incoming products comprise only the package identification data corresponding to the carton C whose arrival has been substantially confirmed, while each of the product data containing the product identification data associated with the package identification data exist separately in the advance shipment identification. Hence, the data management in the management warehouse system 3a can be simplified.

Further, in the embodiment, the barcode 52 is used as the medium, but aside from the barcode, at least any one of the two-dimensional code and contact-free identification element may be available. That is to say, the barcode and the two-dimensional code are printable for recoding, while the contact-free identification element such as an electronic tag is one on which data are writable for recording.

In the present embodiment, the incoming product management means 14 and the inventory management means 15 are constituted so that in addition to the package identification data, the position identification data for identifying the storage position of the carton C corresponding to the package identification data are included in the data on actually received incoming products to be stored in the storage memory with the position identification data associated with the package identification data.

Thus, the data on actually received incoming products stored in the storage medium comprise the package identification data corresponding to the carton C whose arrival has been confirmed and the position identification data for identifying the storage position of the carton C associated with the package identification data. Namely, the position identification data are associated not with the product data for defining the products P existing in vast numbers as the minimal unit but with the package identification data for defining the carton C containing one or more of the products P as the minimal unit. Hence, the burden on the data management in the management warehouse system 3a is kept to the minimum.

Further, in the present embodiment, the reader device 58 is constituted so that when the reader device 58 scans the barcode 52 that is the medium, the operator identification data for identifying a scanning worker stored in advance are output to the incoming product inventory management means together with the package identification data included in the barcode 52. Furthermore, the incoming product management means 14 and the inventory management means 15 are constituted so that in addition to the package identification data, the operator identification data associated with the package identification data are included in the data on actually received incoming products to be stored in the storage means.

As a result, the reader device 58 only scans the barcode 52 that is the medium and is provided on the carton C and Thus the operator identification data for identifying the worker as well as the package identification data included in the barcode 52 are output to the incoming product management means 14. The incoming product management means 14 and the inventory management means 15 that have received the operator identification data can make up the data on actually received incoming products to be stored in the storage means at least by the package identification data corresponding to the carton C whose arrival has been checked and the operator identification data associated with the package identification data. Accordingly, the trouble of writing which worker has performed the work in job cards or the like can be saved. Besides, the operator identification data are associated not with the product data for defining the products P existing in vast numbers as the minimum unit but with the package identification data for defining the carton C that collects up one or more of the products as the minimum unit. Hence, the burden on the data management in the management warehouse system 3a can be again kept to the minimum.

### Second Embodiment

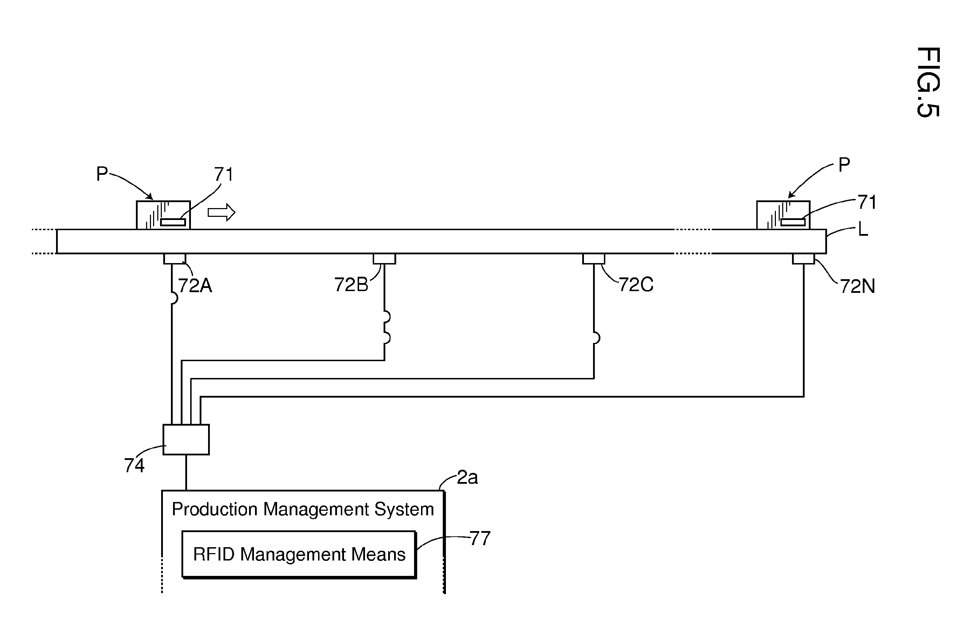

Next is a description of a second embodiment applied to the production management system described above with reference to the accompanying drawings FIG. 5 to FIG. 7. In the present embodiment, as a medium provided on the carton C and the product P, an RFID tag is utilized in which various data can be read out and rewritten by utilizing electromagnetic waves in a contact-free manner instead of the barcode described previously. In the meantime, the same reference symbols are used for parts the same as in the first embodiment and a duplicate description thereof is omitted.

FIG. 5 represents an example of use of such RFID tag for the products P in process of production in the production plant 2. A sheet-like RFID tag 71 is attached to each of the products P that are flowing on a production line L in process of production. The RFID tag 71 utilized in this case is a passive type that enables communication within a range of about 10cm and includes no battery therein. In a course in which the products P of the production line L are conveyed, a plurality of antennae 72A to 72 N serving as RFID headers are arranged at each process step, for example. These antennae 72A to 72N supply RF energy serving as an electric power source to perform data communication between the RFID tags and the antennae. It is desirable that the antennae be provided on e.g., the under sides of a table or the like.

A reader writer 74 with function of reading out and rewriting for the RFID tag 71 is provided in each of or in common with the antennae 72A to 72N. In the present embodiment, the reader writer 74 common to each of the antennae 72A to 72N is separately intervened in order to simplify connection with the production management system 2a. Alternatively, the antennae 72A to 72N and the reader writer 74 may be integrated together.

The production management system 2a comprises an RFID tag management means 77 for giving instructions to write work completion at the process steps corresponding to the antennae 72A to 72N in the RFID tag 71 as a time stamp (data of the present hour and date) every time the RFID tag 71 of the products P flowing on the production line L passes within the communication range of the antennae 72A to 72 N. Alternatively, the function of the RFID tag management means 77 may be given not to the production management system 2a but to the reader writer 74, while data substituting for the time stamp may be exploited as the work completion data of each process step.

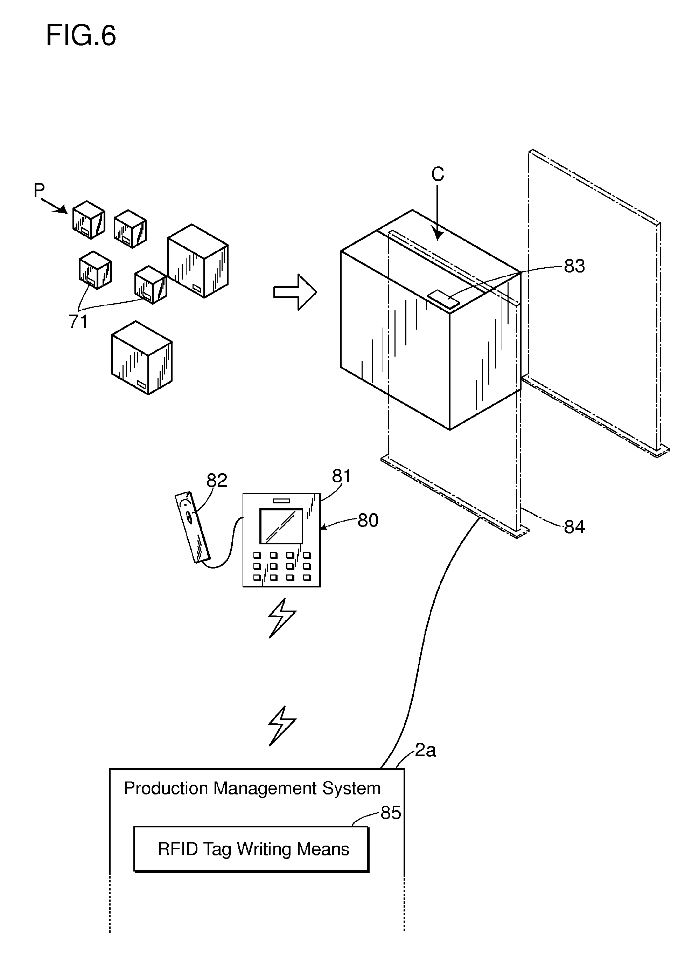

FIG. 6 represents an example of use at the time of packing the products P in the production plant 2. In FIG. 6, reference symbol 80 denotes a handy type portable reader writer provided as a read/write device similar to the antennae 72A to 72N and the reader writer 74. This reader writer comprises, e.g., a terminal 81 with function to communicate wirelessly with the production management system 2a and a reader writer pen 82 that is connected movably to the terminal 81 and comprises the function of antenna and of reading out and rewriting. The reader writer 80 is a substitute for the reader device 58 shown in FIG. 2 in the first embodiment and comprises the function of reading out and rewriting data in a contact-free manner for the RFID tag of the product P completed.

Reference numeral 83 denotes a card-type RFID tag attached to an appropriate portion of the carton C. Here, it is notable that a communication range of the RFID tag 83 provided on the carton C is in the order of 100m, providing far wider a communication range than that of the RFID tag 71 provided on the product P. Therefore, as the RFID tag 83, an active type RFID tag is utilized that incorporates a battery (not shown) as its electrical power source and is capable of performing data communication between an antenna and itself. Reference numeral 84 denotes a gate-type reader writer capable of reading data out of and rewriting data in the RFID tag 83 in a contact-free manner. The gate-type reader writer 84 acts both as an antenna function and a reading out and rewriting function and so can communicate with the RFID tag 83 of the carton C placed within a gate.

Additionally, configurations of the reader writer 80, 84 are not limited to a handy type and a gate stationary type. Further, though not shown here, when a plurality of the cartons C is packed in the case S, the active RFID tag may be attached to a proper portion of the case S.

The production management system 2a comprises an RFID tag writing means 85 that instructs writing of the product identification data specific to each product P in the RFID tag 71 provided on the product P and further instructs writing of the carton ID data specific to each carton C in the RFID tag 84 provided on the cartons C in substitute for the barcode print instruction means 13 shown in FIG. 2 described above. In the present embodiment, since various data can be written directly in the RFID tags 71, 83, e.g., via the reader writer 80, 84, the barcode printer 54 as shown in the first embodiment can be dispensed with. As a matter of course, the function to instruct writing of the cargo identification data in the RFID tag of the case S may be added to the RFID tag writing means 84 described here.

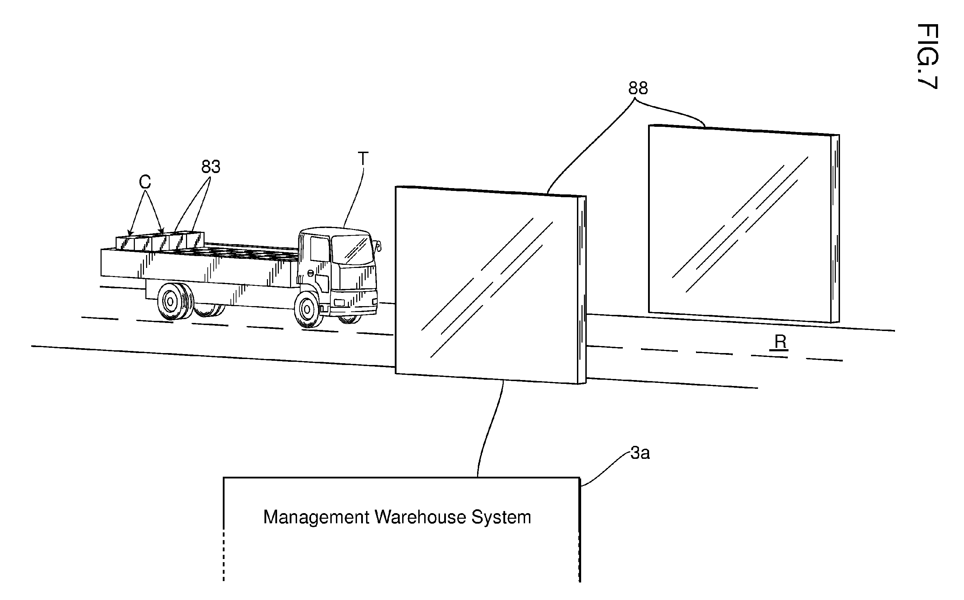

FIG. 7 represents an example of use in the management warehouse 3. In FIG. 7, reference symbol T denotes a cargo track loaded with the cartons C containing the products P and the cargo track T runs on a road R toward the management warehouse 3. The gate type reader writer 88 is provided at an entrance of the management warehouse 3. Every time the cargo track T loaded with the cartons C passes through the reader writer 88 incorporated with the antenna, the carton ID data are read out of the RFID tag 83 that is a medium attached to each carton C. Therefore, this reader writer 88 serving as a reader device may be minimally equipped with only the contact-free readout function. As for the rest, the management warehouse system 3a is common approximately to that of the first embodiment.

Next is a step-by-step description of operation from production to warehousing of the products P into the management warehouse 3 with regard to the system described above. In the management warehouse system 2a, names of the workers at each process step are registered through e.g., a keyboard or the like to be stored in the RFID tag management means 77. This register of the names of the workers can be updated at any time. Further, specific product identification data such as, e.g., the production lot number or the like are written in the RFID tag 71 attached to each product P by the RFID writing means 85. Alternatively, the register of the names of the workers may be practiced not in the management warehouse system 2a but e.g., in the reader writer 74 at a terminal side.

At the time of producing the products P, as shown in FIG. 5, each of the products P is assembled step by step along the production line L. In each process step, every time all work for the products P is completed, the worker brings the RFID tag 71 attached to the product P closer to one of the antennae 72A to 72N corresponding to each process step. In a first process step, e.g., when bringing the RFID tag of the product P closer to the antenna 72A corresponding to the first process step, an induction voltage is generated inside the RFID tag 71 by RF energy from the antenna 72A, so that the product identification data stored in the RFID tag 71 are read out. Receiving the product identification data, the RFID tag management means 77 store a date and an hour when the product identification data have been read as time (work completion time) when the first process step has been completed with the date and hour that have been read associated with the product identification data. Besides, work completion data that associate the work completion time at the first process step and the name of the worker that bas been registered in the RFID tag management means 77 and has been engaged in the first process step, and a name the process step are stored in the RFID tag 71 of the product P via the antenna 72A.

Hereinafter, in a similar fashion, in each process step, every time all the work for the products P is completed, the worker approximates the RFID tag 71 attached to the product P to one of the antennae 72B to 72N corresponding to each process step. Thus, the product identification data stored in the RFID tag 71 are read out of the antennae 72B to 72 N in each process step. The RFID tag management means 77 associates the product identification data and the work completion time in each process step with each other to store the data and the hour, accumulating production history data with regard to the product P. Besides, work history data in which the work completion data at each process step have been accumulated are stored in the RFID tag 71 of each product P. Thus, the advantage of the RFID tag 71 capable of reading out and rewriting in a contact-free manner can be exploited to the utmost extent. Hence, the use of a traveling tag in a production line can be entirely dispensed with.

On the other hand, since the workers at each process step are registered in order of time in the RFID tag management means 77, it can specify from the work completion time at each process step stored in the production history data who is the worker engaged at each process step of a certain product P. If a compliant of an end user has arisen about the product P, by reading directly the work history data out of the RFID tag 71 attached to the product P, the work history data on the production line L can be obtained without bothering to refer to the production plant 2. Besides, the work completion time at each process step is included in the work history data and therefore a tact time (a production speed) for each product P can be calculated from the work completion time, thus enabling traceability of the products P to be enhanced.

Thus, when the work for all the process steps in the production line L has completed, packing of the product P shown in FIG. 6 is practiced. Here, when bringing a point of a reader writer pen 82 close to the RFID tags 71 attached to one or more of the products P to be included in a certain carton C, the product identification data stored in each RFID tag 71 are transmitted from the reader writer 80 to the pre-shipment data creating means 11 of the production management system 2a to be stored temporally in the pre-shipment data creating means 11. Here, the product identification data may be stored temporally in the terminal 81 of the reader writer 80 until information comes in that the RFID tag 83 of the carton C has been read from the pre-shipment data creating means 11.

After the reader writer pen 82 has read the product identification data of all the products to be included in one carton C, the products P containing the product identification data are included in the carton C, which is allowed to pass through the reader writer 84. Then, the reader writer 84 reads out memory contents out of the RFID tag 83 attached to the carton C in a contact-free manner, while here, the pre-shipment data creating means 11 determines whether the carton ID data are included in the RFID tag 83 or not. If no carton ID data are included in the RFID tag 83, by the RFID tag writing means 85, new carton ID data not assigned to the other RFID tag 83 are written in the RFID tag 83 using the reader writer 84. Further, the carton ID data written here and previous product identification data stored temporally in the terminal 81 or in the pre-shipment data creating means 11 are associated with each other in the pre-shipment data creating means 11 to be stored. If the carton ID data are included in the RFID tag 83, these carton ID data and the product identification data stored temporally in the terminal 81 or in the pre-shipment data creating means 11 are associated with each other similarly in the pre-shipment data creating means 11 to be stored in the pre-shipment data creating means 11.

Thus, the carton ID data and the product identification data are associated with each other. Therefore, when designating, e.g., the carton ID data as a search condition, by extracting the product identification data associated with the carton ID data and the product data pertinent to the product identification data, the product data and quantity or the like of each product P packed can be simply obtained without taking the trouble to unpack them. Further, not shown here, the cargo identification data may be stored in the RFID tag attached to the case S to associate the cargo identification data, the carton ID data and the product identification data with one another.

Thereafter, as shown in FIG. 7, the cargo track T loaded with the cartons C runs on the road R toward the management warehouse 3. When the cargo track T passes through the reader writer 88, the reader writer 88 reads the carton ID data out of the RFID tag 83 attached to the carton C. The communication range of the RFID tag 83 is far wider than that of the RFID tag 71 attached to the product P and so the carton ID data of each carton C can be correctly read with the running cargo track T loaded with the cartons C. The pre-shipment data mentioned above have been transmitted to the management warehouse system 3a. Hence, at the time of the inspection of arrival of product in the management warehouse 3, without unpacking the carton C to read all the RFID tags 71 provided on the products P inside the carton C, the cargo track only passes through the reader writer 88 equipped with the antennae, Thus allowing the arrival of the product P included in each carton C to be checked at once from the carton ID data that the reader writer 88 has read with the cargo track T loaded with the cartons C.

Thus, in the present embodiment, as the first medium in the first embodiment, the active RFID tag 83 is utilized in which reading out and rewriting are possible in a contact-free manner. The reader device for reading various data from the RFID tag 83 is established as the reader writer 88 that is installed at the road R that is a conveying passage of the cartons C and comprises the antennae.

By employing this system, in the management warehouse 3, the package identification data are read out of the RFID tag 83 provided on the carton C using the reader writer 88 every time the carton C containing one or more of the products P passes through the conveying passage, e.g., the road R. Thus, since the package identification data and the product identification data are associated with each other in advance, the arrival of all the products P included in the carton C can be checked over a short amount of time without reading out the product identification data by product P. Besides, the first medium utilized here is not the passive type RFID tag 71 with a narrower communication range such as is provided on the product P but the active type RFID tag 83 with a wider communication range. Hence, without taking the trouble to make the antenna of the reader writer 88 approximate the RFID tag 83 within a distance of several cm, the package identification data can be certainly obtained with the RFID tag 83 being in such a contact-free state as is rather distant (about 100m) from the antenna. Accordingly, e.g., only by making the delivery vehicle such as the cargo track T or the like pass through the road R installed with reader writer antenna 88 with the delivery vehicle loaded with the cartons C, the package identification data are read out of the RFID tag 83, thus allowing the arrival of all the products P to be checked extremely rapidly and certainly.

Further, in the present embodiment, the second medium provided on each product P comprises the passive type RFID tag 71 with the narrower communication range than that of the first medium. The pre-shipment data creating means 11 of the production management system 2a is constituted so that the package identification data read out of the RFID tag 83 and the product identification data read out of the RFID tag 71 are associated with each other to create the pre-shipment data.

In this case, in the production plant 2, the product identification data are written in the RFID 71 tag provided on each product P, while the package identification data are written in the RFID tag 83 provided on the carton C. Therefore, by reading out the package identification data out of the RFID tag 83 and besides reading the product identification data out of the RFID tag 71, the pre-shipment data creating means 11 associates these package identification data and product identification data with each other, so that the pre-shipment data required to check the arrival of the products P can be readily made up. Besides, each of the product identification data need not be read out of the RFID tag 71 provided on each product P at the time of the inspection of arrival of product of the products P. Hence, as the second medium, the passive RFID tag 71 is available that is comparatively low-priced and has the narrower communication range, so that the system can be easily established.

Furthermore, in the present embodiment, the pre-shipment data creating means 11 is constituted so that every time receiving the package identification data read out of the RFID tag 83 subsequently to the product identification data read out of the RFID tag 71, these product identification data and package identification data are associated with each other to create the pre-shipment data required at the time of the inspection of arrival of product.

In this case, each of the package identification data are read out of the RFID tag 71 provided on each of the products P and subsequently the products P are contained and packed in the carton C. Then, the package identification data are read out of the RFID tag 83 provided on the carton C, Thus allowing the pre-shipment data to be automatically made up along the packing workflow.

Moreover, in the present embodiment, as shown in FIG. 5, the antennae 72A to 72 N serving as a plurality of the sensor means are provided corresponding to each process step on the production line L. The second medium comprising the passive type RFID tag 71 with the narrower communication range than that of the RFID tag 83 is provided on the product P that passes through the production line L in process of production. Then, there is provided the RFID tag management means 77 serving as the tag writing instruction means that when any one of the antennae 72A to 72N senses the presence of the RFID tag71 provided on the product P, for every process step corresponding to the antennae 72A to 72N, instructs writing, in the RFID tag 71, the work completion data that indicate the work completion at the process step.

In this case, only by brining the products P closer to the antennae 72A to 72N provided at every process step of the production line, the antennae 72A to 72N sense the presence of the RFID tag 71, so that the work completion data for indicating the work completion at that process step are written in the RFID tag 71. Besides, the work history data in which the work completion data at each process step have been accumulated are stored in the RFID tags 71 provided on the product P completed. Hence, even if complaints about products have arisen from user ends, by directly reading the work history data out of the RFID tag 71, without taking the trouble to refer to the production plant or the like, the work history data of the products in the production line L can be obtained on the spot.

Further, in the present embodiment, the RFID tag management means 77 is constituted so that the date and hour that the antennae 72A to 72N have sensed the presence of the RFID tag 71 are included in the work completion data.

As a result, since the date and hour of the work completion at each process step are included in the work history data stored in the RFID tag 71, by reading out these work history data, the date and hour of the work completion that are included in the work history data, the tact time can be calculated for each product P, so that the traceability can be enhanced.

In the meantime, the present invention is not limited to the embodiments described above and various modifications are possible. For example, the storage means incorporated in the production management system 2a and the management warehouse system 3a may be, e.g., an external storage device. If writing and reading out are possible between the production management system 2a and the management warehouse system 3a, such a storage device may be installed anywhere. Further, in the second embodiment, the RFID tag may replace the barcode provided on an area within the management warehouse 3.

## Claims

1. A product management system in which a production management computer installed in a production plant of products and a management warehouse computer installed in a management warehouse for managing a process from arrival and storage of the products sent from said production plant to their shipment are connected with each other via a communication line,
wherein said production management computer comprises:
a pre-shipment data creating means for creating pre-shipment data including: product data including product identification data for identifying each of products and representing features of said products; and package identification data for identifying a package containing one or more of said products, said package identification data being associated with said product identification data; and
a pre-shipment data transmitting means for transmitting said pre-shipment data to said management warehouse computer, and
wherein said management warehouse computer comprises:
a reader device for reading a first medium, said first medium being provided on said package and bearing the package identification data of said packages; and
an incoming product inventory management means for storing the package identification data in a storage medium as data on actually received incoming products by assuming that products corresponding to the product identification data associated with said package identification data have arrived if the package identification data included in said first medium read by said reader device exist in the pre-shipment data transmitted from said production management computer.

2. The product management system according to claim 1, wherein said first medium includes at least one of a barcode, a two-dimensional code and a contact-free identification element.

3. The product management system according to claim 1 or 2, wherein said incoming product inventory management means allows position identification data to be included in said data on actually received incoming products to be stored in said storage means in addition to said package identification data, said position identification data being associated with said package identification data to identify positions where said packages corresponding to said package identification data are stored.

4. The product management system according to any one of claims 1 to 3, wherein after reading said medium, said reader device outputs operator identification data for identifying read operators whose identification data are stored beforehand to said incoming product inventory management means together with the package identification data included in said first medium, while said incoming product inventory management means allows said operator identification data to be included in said data on actually received incoming products to be stored in said storage means in addition to said package identification data, with said operator identification data being associated with said package identification data.

5. The product management system according to claim 1, wherein said first medium comprises an active type RFID tag capable of reading out and rewriting in a contact-free manner, while said reader device comprises antennae installed in a conveying passage of said packages.

6. The product management system according to claim 5, wherein said pre-shipment data creating means is constituted such that a second medium provided on said product comprises a passive type RFID tag whose communication range is narrower than that of said first medium, while said package identification data read out of said first medium and product identification data read out of said second medium are associated with each other to create said pre-shipment data.

7. The product management system according to claim 6, wherein every time said package identification data read out of said first medium are received subsequently to said product identification data read out of said second medium, said pre-shipment data creating means creates pre-shipment data by associating said product identification data with said package identification data.

8. The product management system according to claim 5, wherein said product management system further comprises: a plurality of sensor means, corresponding to respective process steps in a production line; a second medium provided on the product passing through said production line, said second medium comprising a passive type RFID tag whose communication range is narrower than that of said first medium; and an RFID tag writing instruction means for allowing work completion data indicating the completion of work to be written in said second medium at each process step corresponding to said sensor means, when said sensor means senses presence of said second medium.

9. The product management system according to claim 8, wherein said RFID tag writing instruction means allows a date and hour said sensor sensed the presence of said second medium to be included in said work completion data.
